# FASCICULE DE BREVET EUROPEEN

(11) **EP 4 237 599 B1**
(45) Date de publication et mention de la délivrance du brevet: **23.04.2025**
(21) Numéro de dépôt: 21801064.3
(22) Date de dépôt: 25.10.2021
(51) Int. Cl.: C25B 1/042, C25B 9/00, C25B 15/021

(54) **SYSTÈME D'ÉLECTROLYSEUR HAUTE TEMPÉRATURE OPTIMISÉ PAR AUGMENTATION DE LA PRESSION EN SORTIE DE L'ÉLECTROLYSEUR**
DURCH ERHÖHUNG DES DRUCKS AM ELEKTROLYSEURAUSGANG OPTIMIERTES HOCHTEMPERATURELEKTROLYSEURSYSTEM
HIGH TEMPERATURE ELECTROLYSER SYSTEM OPTIMISED BY INCREASING THE PRESSURE AT THE ELECTROLYSER OUTPUT

(30) Priorité: 30.10.2020 FR 2011119
(43) Date de publication de la demande: 06.09.2023
(73) Titulaire: Commissariat à l'Energie Atomique et aux Energies Alternatives, 75015 Paris (FR)
(72) Inventeur: DUMOULIN, Pierre, 38054 Grenoble Cedex 09 (FR); TAUVERON, Nicolas, 38054 Grenoble Cedex 09 (FR); MONTZIEUX, Guillaume, 38054 Grenoble Cedex 09 (FR); LACROIX, Vincent, 38054 Grenoble Cedex 09 (FR); GONZALEZ, Brigitte, 38054 Grenoble Cedex 09 (FR); LOPEZ-VELASCO, Jean-Baptiste, 38054 Grenoble Cedex 09 (FR)
(74) Mandataire: Hautier IP
(86) Numéro de dépôt international: PCT/EP2021/079529
(87) Numéro de publication internationale: WO 2022/090150

(56) Documents cités:
- EP-A1- 3 168 330
- EP-A1- 3 511 441
- EP-B1- 3 168 330
- US-A1- 2013 126 360
- US-A1- 2018 287 179

## Description

### DOMAINE TECHNIQUE DE L'INVENTION

La présente invention concerne le domaine de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis), également à oxyde solide (SOEC, acronyme anglais pour « Solid Oxide Electrolyte Cell ») et celui des piles à combustible à oxydes solides (SOFC, acronyme anglais pour « Solid Oxide Fuel Cell »). Elle trouve pour application particulièrement pour optimiser la consommation énergétique d'un système électrolyseur SOEC.

### ÉTAT DE LA TECHNIQUE

L'électrolyse de l'eau est une réaction électrolytique qui décompose l'eau en dioxygène et dihydrogène gazeux avec l'aide d'un courant électrique selon la réaction :

H₂O → H₂ + 1/2 O₂.

Pour réaliser l'électrolyse de l'eau, il est avantageux de la réaliser à haute température typiquement entre 600 et 950 °C, car une partie de l'énergie nécessaire à la réaction peut être apportée par la chaleur qui est moins chère que l'électricité et l'activation de la réaction sont plus efficaces à haute température et ne nécessite pas de catalyseur. Une cellule d'électrolyse à oxydes solides ou «SOEC» (acronyme anglo-saxon « Solid Oxide Electrolyte Cell ») comprend notamment : - une première électrode conductrice poreuse, ou « cathode », destinée à être alimentée en vapeur d'eau pour la production de dihydrogène, - une seconde électrode conductrice poreuse, ou « anode », par laquelle s'échappe le dioxygène produit par l'électrolyse de l'eau injectée sur la cathode, et - une membrane à oxyde solide (électrolyte dense) prise en sandwich entre la cathode et l'anode, la membrane étant conductrice anionique pour de hautes températures, usuellement des températures supérieures à 600 °C. En chauffant la cellule au moins à cette température et en injectant un courant électrique I entre la cathode et l'anode, il se produit alors une réduction de l'eau sur la cathode, ce qui génère du dihydrogène (H2) au niveau de la cathode et du dioxygène au niveau de l'anode.

Pour réaliser l'électrolyse de la vapeur d'eau à haute température EHT, on injecte de la vapeur d'eau H2O dans le compartiment cathodique.

Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le dihydrogène est collecté et évacué en sortie de compartiment à hydrogène. Les ions oxygène migrent à travers l'électrolyte et se recombinent en dioxygène O₂ à l'interface entre l'électrolyte et l'électrode à oxygène (anode).

Pour la mise en œuvre effective de l'électrolyse par l'empilement, l'empilement est porté à une température supérieure à 600 °C, usuellement une température comprise entre 600°C et 950°C, l'alimentation en gaz est mise en marche à débit constant et une source d'alimentation électrique est branchée entre deux bornes de l'empilement afin d'y faire circuler le courant I.

Le rendement de la transformation électricité en hydrogène est un point clé afin d'assurer la compétitivité de la technologie. La consommation électrique a principalement lieu lors de la réaction d'électrolyse à proprement parler, mais près de 30 % de la consommation de l'électrolyseur provient du système de gestion thermique/hydraulique des fluides. C'est-à-dire l'architecture externe à l'électrolyseur et la gestion des fluides et de l'énergie thermique dans cette architecture.

L'évaporation de l'eau utilisée dans l'électrolyseur est la consommation d'énergie la plus importante de ce système de gestion thermique/hydraulique. Classiquement, cette fonction est assurée par un générateur de vapeur électrique qui consomme 20 % de la consommation globale de l'électrolyseur.

Par ailleurs, en général une partie importante d'énergie est rejetée dans l'environnement ambiant. Par exemple, durant la phase d'assèchement de l'hydrogène et de sa compression il est nécessaire de fortement refroidir ce mélange afin de permettre la condensation de l'eau présente dans le mélange eau/hydrogène. Cette condensation s'effectue très majoritairement à une température inférieure à la température d'évaporation de l'eau en entrée de l'électrolyseur, ce qui fait qu'une très faible part de cette énergie de condensation est utilisable.

De tels systèmes sont décrits dans les demandes de brevet US 2013/126360 A1 et US 2018/287179 A1.

Il existe donc un besoin de minimiser cette consommation en optimisant l'architecture et la gestion des fluides du système de l'électrolyseur.

Un objet de la présente invention est donc de proposer un système d'électrolyseur haute température optimisé.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

L'invention est définie par l'objet de la revendication 1.

Pour atteindre cet objectif l'invention prévoit un système comprenant un électrolyseur à haute température (EHT), une première ligne d'alimentation de l'électrolyseur configurée pour alimenter l'électrolyseur en vapeur d'eau, une première ligne d'évacuation de l'électrolyseur configurée pour évacuer depuis l'électrolyseur du dihydrogène, une deuxième ligne d'évacuation de l'électrolyseur configurée pour évacuer depuis l'électrolyseur du dioxygène, un premier module d'échange thermique configuré pour assurer un échange thermique entre la première ligne d'alimentation en vapeur d'eau et la première ligne d'évacuation du dihydrogène, un générateur de vapeur agencé sur la première ligne d'alimentation en vapeur d'eau, en amont du premier module d'échange thermique, et configuré pour produire de la vapeur d'eau à partir d'eau liquide, caractérisé en ce que le système comprend un module de récupération de l'énergie thermique du dihydrogène en sortie du premier module d'échange thermique au profit de la première ligne d'alimentation en vapeur d'eau, le module de récupération comprenant : un compresseur agencé sur la première ligne d'évacuation du dihydrogène, en aval du premier module d'échange thermique, et configuré pour comprimer le dihydrogène, un premier échangeur thermique agencé entre la première ligne d'alimentation en vapeur d'eau, en amont du générateur de vapeur, et la première ligne d'évacuation du dihydrogène, en aval du compresseur, de sorte à transmettre l'énergie thermique du dihydrogène comprimé à l'eau liquide, en amont du générateur de vapeur.

Cette disposition permet de récupérer l'énergie thermique du dihydrogène produit par l'électrolyseur pour participer à l'évaporation de l'eau liquide et donc réduire la consommation énergétique du système tout en prenant en considération les contraintes des composants pour permettre l'utilisation de composants classiques.

Ainsi, le système utilise la chaleur du dihydrogène en sortie de l'électrolyseur, mais après le premier module d'échange thermique de sorte que la compression du dihydrogène remonte la température du dihydrogène au-delà de la température d'évaporation de l'eau liquide et que le premier échangeur de chaleur thermique se satisfasse d'un échangeur thermique adapté à des températures par exemple inférieures à 300°C donc facilement fournis dans le commerce.

Ainsi, l'architecture du système est optimisée, plus précisément, l'architecture thermo-hydraulique externe à l'électrolyseur est optimisée par la présente invention en permettant la valorisation de l'énergie fatale du dihydrogène au profit du système par un accroissement de la pression en sortie d'électrolyseur. Le système comprend une deuxième ligne d'alimentation de l'électrolyseur configuré pour alimenter l'électrolyseur en air ou un gaz contenant de l'oxygène.

Le système comprend un troisième échangeur thermique agencé entre la première ligne d'évacuation du dihydrogène, en aval du premier échangeur thermique du module de récupération d'énergie, et la deuxième ligne d'alimentation de l'air.

Ainsi, le troisième échangeur thermique agencé entre la deuxième ligne d'alimentation de l'air et la première ligne d'évacuation du dihydrogène permet d'utiliser la chaleur résiduelle du dihydrogène pour chauffer l'air entrant à destination de l'électrolyseur. Le troisième échangeur remplace avantageusement un aéroréfrigérant, classiquement utilisé pour la condensation du dihydrogène, ce qui permet de s'affranchir de la consommation du ventilateur de l'aéroréfrigérant, fortement énergivore.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

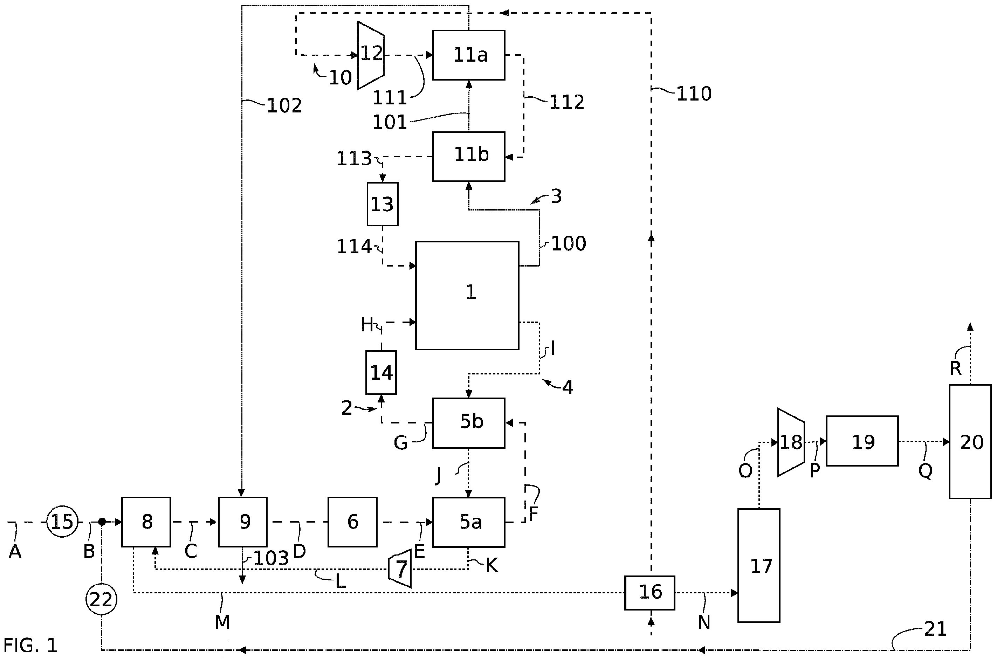

La figure 1 est un schéma fonctionnel représentant le système selon l'invention

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
Selon un exemple, le système comprend un deuxième échangeur thermique agencé entre la deuxième ligne d'évacuation du dioxygène et la première ligne d'alimentation en vapeur d'eau, en amont du générateur de vapeur, de sorte à transmettre l'énergie thermique du dioxygène à l'eau liquide en amont du générateur de vapeur.

Ainsi, ce deuxième échangeur thermique participe à rehausser la température de l'eau liquide avant le générateur de vapeur de sorte à limiter sa consommation énergétique grâce à la récupération de la chaleur du dioxygène produit par l'électrolyseur.

Selon un exemple, le deuxième échangeur thermique est agencé en aval du premier échangeur thermique sur la première ligne d'alimentation en vapeur d'eau. Avantageusement, la source ayant l'énergie à la plus basse température est utilisée en premier afin que celle à la plus haute température soit exploitée à son maximum ensuite.

Selon un exemple, le deuxième échangeur thermique et le premier échangeur thermique agencés sur la première ligne d'alimentation en vapeur d'eau, en aval du générateur de vapeur, sont associés dans un échangeur thermique à trois fluides.

Selon un exemple, le système comprend un deuxième module d'échange thermique configuré pour assurer un échange thermique entre la deuxième ligne d'alimentation en air et la deuxième ligne d'évacuation du dioxygène.

Ainsi, le deuxième module d'échange thermique permet de chauffer le flux entrant d'air par la chaleur du flux sortant de dioxygène.

Selon un exemple, le système comprend un compresseur agencé sur la deuxième ligne d'alimentation en air et destiné à comprimer l'air, préférentiellement agencé en amont du deuxième module d'échange thermique et préférentiellement en aval du troisième échangeur thermique du module de récupération.

L'amont et l'aval, l'entrée, la sortie, en un point donné sont pris en référence au sens de circulation du fluide.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur

Le système selon l'invention comprend un électrolyseur 1 à haute température (EHT). Préférentiellement, l'électrolyseur 1 est de type SOEC de l'acronyme anglais pour « Solid Oxide Electrolyte Cell », c'est-à-dire à oxyde solide.

Le système comprend plusieurs lignes d'alimentation et d'évacuation connectées à l'électrolyseur 1. Ainsi, on entend par ligne une canalisation, un tube ou un ensemble de canalisations ou tubes qui permettent le transport de fluide vers et depuis l'électrolyseur 1.

Le système selon l'invention comprend une première ligne d'alimentation 2 de l'électrolyseur 1 apte à alimenter l'électrolyseur 1 en vapeur d'eau. Selon une possibilité, la première ligne d'alimentation 2 est configurée pour apporter à l'électrolyseur 1 de la vapeur d'eau, on entend par là que la première ligne d'alimentation 2 peut apporter un mélange de vapeur d'eau et d'autre(s) gaz par exemple de l'air ou du dihydrogène ou de dioxyde de carbone. En amont dans cette première ligne d'alimentation 2, la vapeur d'eau n'est pas encore formée et la première ligne d'alimentation 2 est configurée pour recevoir de l'eau liquide. Selon une possibilité préférée, la première ligne d'alimentation 2 comprend une première portion recevant de l'eau liquide et une deuxième portion recevant de la vapeur d'eau. Préférentiellement, la première portion est située en amont d'un générateur de vapeur 6 et la deuxième portion est située en aval dudit générateur de vapeur 6.

Le système selon l'invention comprend une première ligne d'évacuation 4 apte à évacuer depuis l'électrolyseur 1 du dihydrogène (H₂). Préférentiellement, la première ligne d'évacuation 4 reçoit le dihydrogène. Le dihydrogène est avantageusement produit par l'électrolyseur 1. Le dihydrogène est sous forme gazeuse. La première ligne d'évacuation 4 peut évacuer un mélange de dihydrogène et de vapeur d'eau, dite résiduelle n'ayant pas était décomposé par l'électrolyseur 1.

Le système selon l'invention comprend une deuxième ligne d'évacuation 3 apte à évacuer depuis l'électrolyseur 1 du dioxygène (O₂). Préférentiellement, la deuxième ligne d'évacuation 3 reçoit le dioxygène. Le dioxygène est avantageusement produit par l'électrolyseur 1. Le dioxygène est sous forme gazeuse. La deuxième ligne d'évacuation 3 évacue selon une possibilité un gaz enrichi en dioxygène, par exemple de l'air enrichi en dioxygène.

Dans la suite de la description, la première ligne d'alimentation 2 est dénommée première ligne d'alimentation 2 en vapeur d'eau, la première ligne d'évacuation 4 est dénommée première ligne d'évacuation 4 en dihydrogène et la deuxième ligne d'évacuation 3 est dénommée deuxième ligne d'évacuation 3 en dioxygène sans être limitative sur le gaz, le fluide ou le mélange pouvant être transporté dans ces lignes.

Selon l'invention, le système comprend un premier module d'échange thermique 5 configuré pour assurer un échange thermique entre la première ligne d'alimentation 2 en vapeur d'eau et la première ligne d'évacuation 4 du dihydrogène. Ce module d'échange thermique est configuré pour transférer les calories du dihydrogène issu de l'électrolyseur 1 à l'eau destinée à alimenter l'électrolyseur 1. Un flux de gaz de dihydrogène assure l'augmentation de température du flux d'eau ce tout en permettant également de refroidir le flux de dihydrogène évacué et qui est avantageusement asséché et/ou comprimé en vue de son utilisation.

Le premier module d'échange thermique 5 comprend selon un mode de réalisation au moins un échangeur thermique 5a configuré pour assurer le transfert thermique du dihydrogène vers la vapeur d'eau. Selon un mode de réalisation préféré, le premier module d'échange thermique 5 comprend deux échangeurs thermiques 5a, 5 b agencés en série entre la première ligne d'alimentation 2 et la première ligne d'évacuation 4. Cette disposition permet de prévoir un deuxième échangeur thermique 5 b adapté à la température du dihydrogène en sortie de l'électrolyseur 1, classiquement de l'ordre de 700°C, et un premier échangeur thermique 5a plus habituel adapté à la température du dihydrogène après le passage dans un échangeur thermique, soit classiquement de l'ordre de 330°C. De cette manière, les composants sont optimisés pour les températures et transferts thermiques à réaliser.

Le système selon l'invention comprend un générateur de vapeur 6. Le générateur de vapeur 6 est destiné à produire de la vapeur d'eau à partir d'eau liquide. Le générateur de vapeur 6 est alimenté en énergie pour assurer l'augmentation de la température de l'eau liquide au-dessus de sa température d'évaporation. Le générateur de vapeur 6 est un composant constituant la consommation principale en énergie d'un système d'électrolyseur selon l'état de la technique. Le générateur de vapeur 6 est agencé sur la première ligne d'alimentation 2 en vapeur d'eau.

Selon l'invention, le système comprend un module de récupération de l'énergie thermique du dihydrogène en sortie du module d'échange thermique 5 au profit de la première ligne d'alimentation 2 en vapeur d'eau.

Selon l'invention, le module de récupération comprend un compresseur 7. Le compresseur 7 est agencé sur la première ligne d'évacuation 4 du dihydrogène, préférentiellement en aval du premier module d'échange thermique 5. Le compresseur 7 est configuré pour comprimer le dihydrogène. À titre d'exemple, la pression du dihydrogène en sortie de compresseur 7 et notamment dans la connexion fluidique L, est au minimum égale à 5 bars (500 kPa), par exemple 10bars (1Mpa). La compression du dihydrogène circulant dans la première ligne d'évacuation 4 permet de remonter sa température, préférentiellement au-delà de la température d'évaporation de l'eau en condition d'utilisation du générateur de vapeur 6. Le compresseur 7 participe également à obtenir du dihydrogène sec et comprimé. L'emplacement du compresseur 7 sur la première ligne d'évacuation 4 de dihydrogène est choisi pour permettre d'utiliser un compresseur et des matériaux adaptés à des températures qui sont trop hautes et donc qui ne nécessitent pas de composant particulier. En effet, la compression du dihydrogène va augmenter sa température, ainsi il est préféré selon l'invention d'avoir une température du dihydrogène en entrée de compresseur 7, c'est-à-dire dans la connexion fluidique K inférieure à 200°C par exemple compris entre 110°C et 150°C. Ainsi, avant la compression, le dihydrogène est à une température trop proche de la température d'évaporation de l'eau pour être utilisé. Après la compression, c'est-à-dire dans la connexion fluidique L, alimentant le premier échangeur thermique 8, la température du dihydrogène est par exemple de l'ordre de 450°C.

Selon l'invention, le module de récupération comprend un premier échangeur thermique 8 agencé entre la première ligne d'alimentation 2 en vapeur d'eau et la première ligne d'évacuation 4 du dihydrogène. Le premier échangeur thermique 8 est agencé en amont du générateur de vapeur 6 sur la première ligne d'alimentation 2 et en aval du compresseur 7 sur la première ligne d'évacuation 4. Le premier échangeur thermique 8 est configuré pour transmettre l'énergie thermique du dihydrogène comprimé à l'eau liquide, en amont du générateur de vapeur 6. Préférentiellement, le premier échangeur thermique 8 est agencé sur la première portion de la première ligne d'alimentation 2 recevant de l'eau liquide.

Avantageusement, le compresseur 7 et le premier échangeur thermique 8 du module de récupération permettent un gain de l'ordre de 5 % sur le rendement global de conversion électricité vers dihydrogène.

Le compresseur 7 et le premier échangeur thermique 8 participent avantageusement à obtenir du dihydrogène sec et comprimé. Ainsi, le compresseur 7 et le premier échangeur thermique 8 assurent une compression/refroidissement du dihydrogène. Le refroidissement permettant de condenser une partie de l'eau présente dans le dihydrogène. Plus la pression augmente par la compression plus de l'eau liquide peut être extraite du mélange gazeux de dihydrogène. La compression entraine une remontée de la température.

Selon un mode de réalisation, le système comprend un deuxième échangeur thermique 9 agencé sur la première ligne d'alimentation 2 en vapeur d'eau et sur la deuxième ligne d'évacuation 3 du dioxygène. Le deuxième échangeur thermique 9 est préférentiellement agencé sur la première ligne d'alimentation 2 en aval du premier échangeur thermique 8 et en amont du générateur 6. Le deuxième échangeur thermique 9 est agencé sur la première portion de la première ligne d'alimentation 2. Ce deuxième échangeur thermique 9 est configuré pour assurer le transfert thermique de calories prélevées sur le flux de dioxygène évacué de l'électrolyseur 1 et circulant dans la deuxième ligne d'évacuation 3 au profit de la ligne d'alimentation 2 en vapeur d'eau. Le deuxième échangeur thermique 9 est configuré pour transmettre l'énergie thermique du dioxygène en sortie de l'électrolyseur 1 à l'eau liquide, en amont du générateur de vapeur 6.

Selon une possibilité, le premier échangeur thermique 8 et le deuxième échangeur thermique 9 sont regroupés dans un échangeur thermique à trois fluides. L'échangeur thermique à trois fluides assure les échanges comme le premier échangeur thermique 8 et le deuxième échangeur thermique 9, c'est-à-dire depuis le dihydrogène circulant dans la première ligne d'évacuation 4 vers l'eau liquide circulant dans la première ligne d'alimentation 2 et depuis le dioxygène circulant dans la deuxième ligne d'évacuation 3 vers l'eau liquide circulant dans la première ligne d'alimentation 2.

Selon l'invention, le système comprend une deuxième ligne d'alimentation 10 apte à alimenter l'électrolyseur 1 en air. Selon une possibilité, la deuxième ligne d'alimentation 10 est configurée pour apporter à l'électrolyseur 1 de l'air, on entend par là que la deuxième ligne d'alimentation 10 peut apporter de l'air, l'air étant par exemple un mélange gazeux qui permet de balayer la cellule de l'électrolyseur 1 et d'emporter le dioxygène produit par l'électrolyseur 1.

Selon ce mode de réalisation, il est avantageux que le système selon l'invention comprenne un deuxième module d'échange thermique 11 configuré pour assurer un échange thermique entre la deuxième ligne d'alimentation 10 en air et la deuxième ligne d'évacuation 3 du dioxygène. Ce module d'échange thermique 11 est configuré pour transférer les calories du dioxygène issu de l'électrolyseur 1 à l'air destiné à alimenter l'électrolyseur 1. Un flux de gaz de dioxygène assure l'augmentation de la température du flux d'air ce qui permet également de refroidir le flux de dioxygène évacué.

Le deuxième module d'échange thermique 11 comprend selon un mode de réalisation au moins un échangeur thermique 11a configuré pour assurer le transfert thermique du dioxygène vers l'air. Selon un mode de réalisation préféré, le deuxième module d'échange thermique 11 comprend deux échangeurs thermiques 11a, 11 b agencés en série entre la deuxième ligne d'alimentation 10 et la deuxième ligne d'évacuation 3. Cette disposition permet de prévoir un deuxième échangeur thermique 11 b adapté à la température du dioxygène en sortie de l'électrolyseur 1, classiquement de l'ordre de 700 °C, et un premier échangeur thermique 11a plus habituel adapté à la température du dioxygène après le passage dans un échangeur thermique, soit classiquement de l'ordre de 330 °C. De cette manière, les composants sont optimisés pour les températures et transferts thermiques à réaliser.

Le système comprend préférentiellement un compresseur 12 agencé sur la deuxième ligne d'alimentation 10 destinée à l'alimentation en air. Le compresseur 12 est préférentiellement agencé en amont du deuxième module d'échange thermique 11, s'il est présent. Le compresseur 12 est destiné à assurer la compression de l'air destiné à être fourni à l'électrolyseur 1. La compression de l'air contribue avantageusement à augmenter la température de l'air avant son entrée dans l'électrolyseur 1.

Selon un mode de réalisation, le système comprend des moyens de traitement du flux de dihydrogène produit. Le dihydrogène produit par l'électrolyseur 1 et qui ressort de celui-ci par la première ligne d'évacuation 4 présente tout d'abord une température très élevée correspondant à la température de réaction de l'électrolyseur 1. Or, en vue de son utilisation, le dihydrogène doit préférentiellement être ramené à une température proche de la température ambiante. Par ailleurs, le dihydrogène évacué de l'électrolyseur 1 par la première ligne d'évacuation 4 peut comprendre de la vapeur d'eau emportée avec le flux de dihydrogène. Il est donc également préféré de séparer le dihydrogène de l'éventuelle vapeur d'eau emportée avec, en l'asséchant.

Le système selon l'invention comprend avantageusement à cet effet au moins un premier étage de traitement destiné à l'assèchement et/ou compression du dihydrogène produit.

Selon l'invention, le premier étage de traitement comprend un échangeur thermique. L'échangeur thermique est agencé sur la première ligne d'évacuation 4, en aval du premier module d'échange thermique 5 et du premier échangeur thermique 8. Cet échangeur thermique est selon une première possibilité un aéroréfrigérant, c'est-à-dire un échangeur thermique entre un fluide et un gaz, le gaz étant mis en mouvement par un ventilateur. Selon une autre possibilité , l'échangeur thermique est un refroidisseur standard, c'est-à-dire sans ventilateur, cette solution étant toutefois moins efficace. Selon l'invention représentée en figure 1, l'échangeur thermique est dénommé troisième échangeur thermique 16 et assure l'échange thermique entre le fluide et un gaz et en particulier de l'air destiné à l'alimentation de l'électrolyseur 1.

Selon une possibilité qui ne fait pas partie de l'invention, le premier étage de traitement comprend un aéroréfrigérant, non représenté en figure 1, mais s'agençant à l'emplacement du troisième échangeur thermique 16 décrit ci-dessous auquel la connexion fluidique 110 est supprimée. Le premier aéroréfrigérant est agencé sur la première ligne d'évacuation 4, préférentiellement en aval du premier module d'échange thermique 5 et plus préférentiellement en aval du premier échangeur thermique 8 du module de récupération d'énergie thermique. Selon l'invention représentée en figure 1, l'aéroréfrigérant est remplacé par un troisième échangeur thermique 16. Le système comprend alors un troisième échangeur 16 agencé sur la première ligne d'évacuation 4 du dihydrogène et sur la deuxième ligne d'alimentation 10 d'air. De cette manière, l'air destiné à entrer dans l'électrolyseur 1 est préchauffé par le transfert de calories depuis le dihydrogène. L'agencement du troisième échangeur thermique 16 correspond à celui de l'aéroréfrigérant décrit ci-dessus, c'est-à-dire en aval du premier échangeur thermique 8 du module de récupération.

Le premier étage de traitement comprend avantageusement un séparateur de liquide/gaz 17 agencé en aval de l'aéroréfrigérant ou du troisième échangeur thermique 16, selon le mode de réalisation. Le séparateur 17 permet de séparer l'eau liquide du dihydrogène gazeux, l'eau liquide résultant du refroidissement de la vapeur d'eau dans l'aéroréfrigérant ou dans le troisième échangeur thermique 16 en dessous de son point de condensation.

Selon une possibilité préférée, le système comprend un deuxième étage de traitement agencé en aval du premier étage de traitement sur la première ligne d'évacuation 4. Le deuxième étage de traitement permet de compléter l'assèchement du dihydrogène. Le deuxième étage de traitement comprend avantageusement un échangeur thermique qui comme pour le premier étage peut être un refroidisseur standard, un aéroréfrigérant 19 ou troisième échangeur thermique entre un fluide (dihydrogène) et l'air destiné à l'alimentation de l'électrolyseur 1. Le deuxième étage comprend un séparateur de liquide/gaz 20. Préférentiellement, le système comprend entre le premier étage de traitement et le deuxième étage de traitement un compresseur 18 configuré pour permettre le deuxième traitement par l'aéroréfrigérant 19 en augmentant au préalable la température du mélange de sorte à pouvoir le refroidir à nouveau.

À l'issue du premier étage de traitement et/ou du deuxième étage de traitement, si présent, l'eau liquide est préférentiellement recyclée en étant renvoyée vers la première ligne d'alimentation 2 en vapeur d'eau par une ligne de recyclage d'eau 21. La ligne de recyclage d'eau est connectée fluidiquement à la première ligne d'alimentation 2, préférentiellement en amont du générateur de vapeur 6, préférentiellement en amont du premier échangeur thermique 8 du module de récupération d'énergie thermique c'est-à-dire préférentiellement sur la première portion de la première ligne d'alimentation 2. Le dihydrogène est quant à lui utilisé et notamment stocké après des traitements classiques.

Selon une possibilité non représentée, l'aéroréfrigérant 19 du deuxième étage de traitement est remplacé par un quatrième échangeur. Le quatrième échangeur est agencé sur la première ligne d'évacuation 4 du dihydrogène, préférentiellement en aval du troisième échangeur thermique 16, et sur la deuxième ligne d'alimentation 10 d'air préférentiellement en amont du troisième échangeur thermique 16.

Selon une possibilité, le système comprend au moins une source de chaleur complémentaire configurée pour chauffer la vapeur d'eau entrant dans l'électrolyseur 1 jusqu'à une température cible prédéfinie. La source de chaleur complémentaire est avantageusement agencée sur la première ligne d'alimentation 2 en vapeur d'eau, préférentiellement en aval du premier module d'échange thermique 5. La source de chaleur complémentaire est par exemple un réchauffeur électrique 14.

Selon une possibilité, le système comprend au moins une source de chaleur complémentaire configurée pour chauffer l'air entrant dans l'électrolyseur 1 jusqu'à une température cible prédéfinie. La source de chaleur complémentaire est avantageusement agencée sur la deuxième ligne d'alimentation 10 en air, préférentiellement en aval du deuxième module d'échange thermique 11. La source de chaleur complémentaire est par exemple un réchauffeur électrique 13.

Selon un mode de réalisation, le système comprend au moins une pompe 15 agencée sur la première ligne d'alimentation 2 en vapeur d'eau configurée pour mettre en mouvement l'eau liquide dans la première portion de la première ligne d'alimentation 2 en amont du générateur de vapeur 6.

Le système comprend préférentiellement une pompe 22 sur la ligne de recyclage d'eau 21. La pompe 22 est configurée pour mettre en mouvement l'eau liquide circulant dans la ligne de recyclage d'eau 21 et issue du séparateur de gaz/liquide 20.

L'électrolyseur 1 reçoit de la vapeur d'eau et de l'air et rejette du dihydrogène et du dioxygène.

L'électrolyseur 1 est connecté fluidiquement à la première ligne d'alimentation 2 en vapeur d'eau. La première ligne d'alimentation 2 en vapeur assure la connexion fluidique de composants agencés en amont de l'électrolyseur 1 sur ladite première ligne d'alimentation 2. La description qui suit est faite en débutant en amont de l'électrolyseur 1 et en suivant le sens de circulation dans la première ligne d'alimentation 2. La première ligne d'alimentation 2 assure la connexion fluidique du premier échangeur thermique 8 du module de récupération au deuxième échangeur thermique 9 du module de récupération, puis la connexion fluidique du deuxième échangeur thermique 9 du module de récupération au générateur de vapeur 6, puis la connexion fluidique du générateur de vapeur 6 au premier module d'échange thermique 5, préférentiellement au premier échangeur thermique 5a, puis la connexion fluidique du premier échangeur thermique 5a au deuxième échangeur thermique 5b, puis la connexion fluidique du deuxième échangeur thermique 5 b au réchauffeur électrique 14, puis la connexion fluidique du réchauffeur électrique 14 à l'électrolyseur 1.

L'électrolyseur 1 est connecté fluidiquement à une première ligne d'évacuation 4 de dihydrogène. La première ligne d'évacuation 4 assure la connexion fluidique de composants agencés en aval de l'électrolyseur 1 sur ladite première ligne d'évacuation 4. La description qui suit est faite en débutant de l'électrolyseur 1 et en suivant le sens de circulation dans la première ligne d'évacuation 4 depuis l'électrolyseur 1. La première ligne d'évacuation 4 assure la connexion fluidique de l'électrolyseur 1 avec le premier module d'échange thermique 5, plus préférentiellement avec le deuxième échangeur thermique 5 b, puis la connexion fluidique du deuxième échangeur thermique 5 b au premier échangeur thermique 5a, puis la connexion fluidique du premier échangeur thermique 5a au compresseur 7, puis la connexion fluidique du compresseur 7 au premier échangeur 8 du module de récupération puis la connexion fluidique du premier échangeur 8 du module de récupération au troisième échangeur thermique 16 ou aéroréfrigérant, puis la connexion fluidique du troisième échangeur thermique 16 au séparateur liquide/gaz 17, puis la connexion fluidique du séparateur liquide/gaz 17 au le compresseur 18, puis la connexion fluidique du compresseur 18 à l'aéroréfrigérant 19, puis la connexion fluidique de l'aéroréfrigérant 19 au séparateur liquide/gaz 20.

L'électrolyseur 1 est connecté fluidiquement à une de deuxième ligne d'évacuation 3 de dioxygène. La deuxième ligne d'évacuation 3 assure la connexion fluidique de composants agencés en aval de l'électrolyseur 1 sur ladite deuxième ligne d'évacuation 3. La description qui suit est faite en débutant de l'électrolyseur 1 et en suivant le sens de circulation dans la deuxième ligne d'évacuation 3 depuis l'électrolyseur 1. La deuxième ligne d'évacuation 3 assure la connexion fluidique de l'électrolyseur 1 avec le deuxième module d'échange thermique 11, plus préférentiellement avec le deuxième échangeur thermique 11 b, puis la connexion fluidique du deuxième échangeur thermique 11 b au premier échangeur thermique 11a, puis la connexion fluidique du premier échangeur thermique 11a au deuxième échangeur thermique 9 du module de récupération.

L'électrolyseur 1 est connecté fluidiquement à la deuxième ligne d'alimentation 10 en air. La deuxième ligne d'alimentation 10 assure la connexion fluidique de composants agencés en amont de l'électrolyseur 1 sur ladite deuxième ligne d'alimentation 10. La deuxième ligne d'alimentation assure la connexion fluidique du compresseur 12 au premier échangeur thermique 11a, puis la connexion fluidique du premier échangeur thermique 11a au deuxième échangeur thermique 11b, puis la connexion fluidique du deuxième échangeur thermique 11 b au réchauffeur électrique 13, puis la connexion fluidique du réchauffeur électrique 13 à l'électrolyseur 1. Selon une possibilité, en amont du compresseur 12, la deuxième ligne d'alimentation assure la connexion fluidique du troisième échangeur thermique 16 au compresseur 12.

Le système comprend des connexions fluidiques décrites ci-après et faisant partie des différentes lignes d'alimentation 2, 10 et d'évacuation 3, 4 du système.

Concernant la première ligne d'alimentation 2, elle comprend avantageusement une connexion fluidique A connectée à l'entrée de la pompe 15.

Avantageusement, la première ligne d'alimentation 2 comprend une connexion fluidique B connectée entre la sortie de la pompe 15 et l'entrée du premier échangeur thermique 8.

Avantageusement, la première ligne d'alimentation 2 comprend une connexion fluidique C connectée entre la sortie du premier échangeur thermique 8 et du deuxième échangeur thermique 9.

Avantageusement, la première ligne d'alimentation 2 comprend une connexion fluidique D connectée entre la sortie du deuxième échangeur thermique 9 et l'entrée du générateur de vapeur 6.

Avantageusement, la première ligne d'alimentation 2 comprend une connexion fluidique E connectée entre la sortie du générateur de vapeur 6 et l'entrée du premier échangeur thermique 5a du module d'échange thermique 5.

Avantageusement, la première ligne d'alimentation 2 comprend une connexion fluidique F connectée entre la sortie du premier échangeur thermique 5a et l'entrée du deuxième échangeur thermique 5 b.

Avantageusement, la première ligne d'alimentation 2 comprend une connexion fluidique J connectée entre la sortie du deuxième échangeur thermique 5 b et l'entrée du réchauffeur électrique 14.

Avantageusement, la première ligne d'alimentation 2 comprend une connexion fluidique H connectée entre la sortie du réchauffeur électrique 14 et l'entrée de l'électrolyseur 1.

Concernant la première ligne d'évacuation 4, elle comprend avantageusement une première connexion fluidique I entre la sortie de l'électrolyseur 1 et l'entrée du deuxième échangeur thermique 5 b du premier module d'échange thermique 5.

Avantageusement, la première ligne d'évacuation 4 comprend une connexion fluidique J entre la sortie du deuxième échangeur thermique 5 b du premier module d'échange thermique 5 et l'entrée du premier échangeur thermique 5a du premier module d'échange thermique 5.

Avantageusement, la première ligne d'évacuation 4 comprend une connexion fluidique K entre la sortie du premier échangeur thermique 5a et l'entrée du compresseur 7.

Avantageusement, la première ligne d'évacuation 4 comprend une connexion fluidique L entre la sortie du compresseur 7 et l'entrée du premier échangeur thermique 8 du module de récupération.

Avantageusement, la première ligne d'évacuation 4 comprend une connexion fluidique M entre la sortie du premier échangeur thermique 8 et le troisième échangeur thermique 16, pouvant être remplacé par un aéroréfrigérant.

Avantageusement, la première ligne d'évacuation 4 comprend une connexion fluidique N entre la sortie du troisième échangeur thermique 16 pouvant être remplacé par un aéroréfrigérant et l'entrée du séparateur 17.

Avantageusement, la première ligne d'évacuation 4 comprend une connexion fluidique O entre la sortie du séparateur 17 et l'entrée du compresseur 18.

Avantageusement la première ligne d'évacuation 4 comprend une connexion fluidique P entre la sortie du compresseur 18 et l'entrée de l'aéroréfrigérant 19.

Avantageusement, la première ligne d'évacuation 4 comprend une connexion fluidique Q entre la sortie de l'aéroréfrigérant 19 et le séparateur 20.

Avantageusement, la première ligne d'évacuation 4 comprend une connexion fluidique R assurant la sortie du dihydrogène depuis le séparateur 20.

Concernant la deuxième ligne d'évacuation 3 de dioxygène, elle comprend avantageusement une connexion fluidique 100 entre la sortie de l'électrolyseur 1 et l'entrée du deuxième échangeur thermique 11 b du deuxième module d'échange thermique 11.

Avantageusement, la deuxième ligne d'évacuation 3 comprend une connexion fluidique 101 entre la sortie du deuxième échangeur thermique 11 b et l'entrée du premier échangeur thermique 11a du deuxième module d'échange thermique 11.

Avantageusement, la deuxième ligne d'évacuation 3 comprend une connexion fluidique 102 entre la sortie du premier échangeur thermique 11a et l'entrée du deuxième échangeur thermique 9.

Avantageusement, la deuxième ligne d'évacuation 3 comprend une connexion fluidique 103 entre la sortie du deuxième échangeur thermique 9 et l'extérieur.

Concernant la deuxième ligne d'alimentation 10 en air, elle comprend avantageusement une connexion fluidique 110 entre la sortie du troisième échangeur thermique 16 et l'entrée du compresseur 12.

Avantageusement, la deuxième ligne d'alimentation 10 comprend une connexion fluidique 111 entre la sortie du compresseur 12 et l'entrée du premier échangeur thermique 11a du deuxième module d'échange thermique 11.

Avantageusement, la deuxième ligne d'alimentation 10 comprend une connexion fluidique 112 entre la sortie du premier échangeur thermique 11a et l'entrée du deuxième échangeur thermique 11 b du deuxième module d'échange thermique 11.

Avantageusement, la deuxième ligne d'alimentation 10 comprend une connexion fluidique 113 entre la sortie du deuxième échangeur thermique 11 b et l'entrée du réchauffeur électrique 13.

Avantageusement, la deuxième ligne d'alimentation 10 comprend une connexion fluidique 114 entre la sortie du réchauffeur électrique 13 et l'entrée de l'électrolyseur 1.

En fonctionnement, l'eau liquide arrive dans la première ligne d'alimentation 2 en vapeur d'eau, plus précisément dans la première portion par la connexion fluidique A. La connexion fluidique A est avantageusement connectée à l'entrée de la pompe 15 qui met en mouvement l'eau liquide et assure avantageusement une mise sous pression de la première ligne d'alimentation 2. La ligne de recyclage d'eau 21 est avantageusement connectée fluidiquement à la première ligne d'alimentation 2 par la connexion fluidique B assurant la connexion fluidique de la sortie pompe 15 à l'entrée dans le premier échangeur thermique 8 du module de récupération par la connexion fluidique B. L'eau recyclée et l'eau liquide pénètrent dans le premier échangeur thermique 8 du module de récupération. La température de l'eau augmente par récupération des calories du dihydrogène circulant dans le premier échangeur thermique 8. L'eau réchauffée sort du premier échangeur thermique 8 par la connexion fluidique C et pénètre, préférentiellement directement, c'est-à-dire sans organe intermédiaire, dans le deuxième échangeur thermique 9. La température de l'eau augmente par récupération des calories du dioxygène circulant dans le deuxième échangeur thermique 9. L'eau liquide chaude sort du deuxième échangeur thermique 9 par la connexion fluidique D à une température avantageusement proche de la température d'évaporation, c'est à dire à +/-5°C et, pénètre préférentiellement, directement dans le générateur de vapeur 6. L'eau liquide est transformée en vapeur par le générateur de vapeur 6.

Selon l'invention, l'énergie devant être fournie par le générateur de vapeur 6 pour la transformation de l'eau liquide en vapeur d'eau est réduite grâce au module de récupération d'énergie thermique et en particulier au premier échangeur thermique 8 et avantageusement également au deuxième échangeur thermique 9 assurant une augmentation de la température de l'eau liquide par récupération d'énergie thermique du dihydrogène et du dioxygène produit par l'électrolyseur 1.

La vapeur d'eau sort du générateur de vapeur 6 par la connexion fluidique E et pénètre, préférentiellement directement, dans le premier module d'échange thermique 5, préférentiellement dans le premier échangeur thermique 5a. La vapeur d'eau est chauffée dans le premier échangeur thermique 5a par récupération des calories du dihydrogène circulant dans le premier échangeur thermique 5a. La vapeur d'eau surchauffée sort du premier échangeur thermique 5a par la connexion fluidique F et pénètre, préférentiellement directement, dans le deuxième échangeur thermique 5 b. La vapeur d'eau est à nouveau chauffée dans le deuxième échangeur thermique 5 b par récupération des calories du dihydrogène circulant dans le deuxième échangeur thermique 5 b. La vapeur d'eau surchauffée sort du deuxième échangeur thermique 5 b par la connexion fluidique F et pénètre, préférentiellement directement, dans le réchauffeur électrique 14 si besoin. Le réchauffeur électrique 14 assure la dernière montée en température éventuellement nécessaire pour que la vapeur d'eau atteigne une température cible prédéfinie pour entrer dans l'électrolyseur 1. La vapeur d'eau sort du réchauffeur électrique 14 par la connexion fluidique H et pénètre, préférentiellement directement, dans l'électrolyseur 1.

L'électrolyseur 1 est alimenté en courant électrique selon une tension et une intensité prédéfinie permettant d'assurer l'électrolyse et donc la production de dihydrogène et dioxygène.

Le dihydrogène sort de l'électrolyseur 1 par la première ligne d'évacuation, par la connexion fluidique I et pénètre, préférentiellement directement, dans le premier module d'échange thermique 5, préférentiellement dans deuxième échangeur thermique 5 b. Le dihydrogène sort de l'électrolyseur à l'état gazeux chaud, il est nécessaire d'abaisser sa température pour l'utiliser et/ou le stocker. Les calories du dihydrogène sont donc récupérées par la première ligne d'alimentation et plus précisément la vapeur y circulant. Dans le deuxième échangeur thermique 5 b, le dihydrogène voit sa température baissée par transfert de calories au profit de la vapeur d'eau circulant dans le deuxième échangeur thermique 5 b. Le dihydrogène refroidi sort du deuxième échangeur thermique 5 b par la connexion fluidique J et pénètre, préférentiellement directement, dans le premier échangeur thermique 5a. Dans le premier échangeur thermique 5a, le dihydrogène voit à nouveau sa température baissée par transfert de calories au profit de la vapeur d'eau circulant dans le premier échangeur thermique 5a. Le dihydrogène refroidi sort du premier échangeur thermique 5a par la connexion fluidique K et pénètre, préférentiellement directement, dans le compresseur 7. En passant dans le compresseur 7, le dihydrogène est comprimé et voit sa température augmenter, préférentiellement au-dessus de la température d'évaporation de l'eau. Le dihydrogène sort du compresseur 7 par la connexion fluidique L et pénètre, préférentiellement directement, dans le premier échangeur thermique 8 du module de récupération. Le dihydrogène réchauffé par la compression voit sa température baissée par transfert de calories au profit de l'eau liquide circulant dans le premier échangeur thermique 8. Le dihydrogène sort du premier échangeur thermique 8 par la connexion fluidique M à une température de l'ordre de celle à laquelle il est sorti du premier module d'échange thermique 5 par la connexion fluidique K. Le dihydrogène passe alors dans le troisième échangeur thermique 16 ou l'aéroréfrigérant assurant le refroidissement du dihydrogène et avantageusement le réchauffement de l'air pouvant circuler dans la deuxième ligne d'alimentation 10 et être destiné à être introduit dans l'électrolyseur 1. Le dihydrogène sort du troisième échangeur thermique 16 par la connexion fluidique N et pénètre, préférentiellement directement, dans le séparateur de liquide/gaz 17 assurant la condensation du dihydrogène. Le dihydrogène sort du séparateur de liquide/gaz 17 par la connexion fluidique O et subit si besoin une nouvelle compression en vue d'une nouvelle condensation. Dans ce cas, le dihydrogène sort du séparateur de liquide/gaz 17 par la connexion fluidique O et pénètre, préférentiellement directement, dans le compresseur 18 d'où il sort par la connexion fluidique P et pénètre, préférentiellement directement, dans l'aéroréfrigérant 19 ou un échangeur thermique assurant le refroidissement du dihydrogène et avantageusement le réchauffement de l'air pouvant être destiné à être introduit dans l'électrolyseur 1. Le dihydrogène sort de l'aéroréfrigérant 19 ou un échangeur thermique par la connexion fluidique Q et pénètre, préférentiellement directement, dans le séparateur de liquide/gaz 20 assurant la condensation du dihydrogène. Le dihydrogène condensé sort du séparateur de liquide/gaz 20 par la connexion fluidique R et peut être utilisé ou stocké. L'eau liquide condensée récupérée du séparateur de liquide/gaz 17, 20 peut être recyclée dans la première ligne d'alimentation 2 en vapeur d'eau par connexion fluidique avec la ligne de recyclage d'eau 21.

Le dioxygène produit par l'électrolyseur sort par la deuxième ligne d'évacuation 3, par la connexion fluidique 100 et pénètre, préférentiellement directement, dans le deuxième module d'échange thermique 11, préférentiellement le deuxième échangeur thermique 11 b. Le dioxygène sort de l'électrolyseur à l'état gazeux chaud, il est nécessaire d'abaisser sa température pour le rejet dans l'air. Les calories du dioxygène sont donc récupérées avantageusement par la deuxième ligne d'alimentation 10 et plus précisément l'air y circulant. Dans le deuxième échangeur thermique 11 b, le dioxygène voit sa température baissée par transfert de calories au profit de l'air circulant dans le deuxième échangeur thermique 11 b. Le dioxygène refroidi sort du deuxième échangeur thermique 11 b par la connexion fluidique 101 et pénètre, préférentiellement directement, dans le premier échangeur thermique 11a. Dans le premier échangeur thermique 11a, le dioxygène voit à nouveau sa température baissée par transfert de calories au profit de l'air circulant dans le premier échangeur thermique 11a. Le dioxygène refroidi sort du premier échangeur thermique 11a par la connexion fluidique 102 et avantageusement pénètre, préférentiellement directement, dans le deuxième échangeur thermique 9 du module de récupération. En passant dans le deuxième échangeur thermique 9, le dioxygène voit à nouveau sa température baissée par transfert de calories au profit de l'eau liquide circulant dans le deuxième échangeur thermique 9. L'air sort du deuxième échangeur thermique par la connexion fluidique 103 et est rejeté dans l'air.

Selon une possibilité, de l'air est fourni à l'électrolyseur 1. L'air arrive par la deuxième ligne d'alimentation 10. L'air traverse le troisième échangeur thermique 16 et récupère des calories du dihydrogène circulant dans l'échangeur thermique. Ce premier échange thermique assure un premier chauffage de l'air. L'air sort de l'échangeur thermique 16 par la connexion fluidique 110 et pénètre, préférentiellement directement, dans le compresseur 12. L'air est comprimé par le compresseur 12 et sa température augmente. L'air sort du compresseur 12 par la connexion fluidique 111 et pénètre, préférentiellement directement, dans le deuxième module d'échange thermique 11, préférentiellement dans le premier échangeur thermique 11a. L'air est chauffé dans le premier échangeur thermique 11a par récupération des calories du dioxygène circulant dans le premier échangeur thermique 11a. L'air surchauffé sort du premier échangeur thermique 11a par la connexion fluidique 112 et pénètre, préférentiellement directement, dans le deuxième échangeur thermique 11 b. L'air est à nouveau chauffé dans le deuxième échangeur thermique 11 b par récupération des calories du dioxygène circulant dans le deuxième échangeur thermique 11 b. L'air surchauffé sort du deuxième échangeur thermique 11 b par la connexion fluidique 113 et pénètre, préférentiellement directement, dans le réchauffeur électrique 13 si besoin. Le réchauffeur électrique 13 assure la dernière montée en température éventuellement nécessaire pour que l'air atteigne une température cible prédéfinie pour entrer dans l'électrolyseur 1. L'air sort du réchauffeur électrique 13 par la connexion fluidique 114 et pénètre, préférentiellement directement, dans l'électrolyseur 1.

| Connexion fluidique | Température °C | Pression bar |
|---|---|---|
| A | 20 | |
| B | 20 | 1,8 |
| C | 115 | |
| D | 115 | |
| E | 112 | |
| F | 300 | |
| G | 614 | |
| H | 700 | |
| I | 700 | |
| J | 330 | |
| K | 117 | |
| L | 460 | |
| M | 120 | |
| N | 45 | |
| O | | |
| P | 370 | 10 |
| Q | 41 | |
| R | | |
| 100 | 700 | |
| 101 | 450 | |
| 102 | 230 | |
| 110 | | |
| 111 | 65 | 1,55 |
| 112 | 350 | |
| 113 | 670 | |
| 114 | 700 | |

L'invention n'est pas limitée aux modes de réalisations précédemment décrits et s'étend à tous les modes de réalisation couverts par les revendications.

### LISTE DES REFERENCES

- 1: Electrolyseur
- 2: Première ligne d'alimentation en vapeur d'eau
- 3: Deuxième ligne d'évacuation de dioxygène
- 4: Première ligne d'évacuation de dihydrogène
- 5a: Premier échangeur thermique du premier module d'échange thermique
- 5b: Deuxième échangeur thermique du premier module d'échange thermique
- 6: Générateur de vapeur
- 7: Compresseur
- 8: Premier échangeur thermique du module de récupération
- 9: Deuxième échangeur thermique
- 10: Deuxième ligne d'alimentation en air
- 11a: Premier échangeur thermique du deuxième module d'échange thermique
- 11b: Deuxième échangeur thermique du deuxième module d'échange thermique
- 12: Compresseur
- 13: Réchauffeur électrique
- 14: Réchauffeur électrique
- 15: Pompe
- 16: Troisième échangeur thermique
- 17: Séparateur liquide/Gaz
- 18: Compresseur
- 19: Aéroréfrigérant
- 20: Séparateur liquide/Gaz
- 21: Ligne de recyclage d'eau
- 22: Pompe
- A: Connexion fluidique entrant dans la pompe 15
- B: Connexion fluidique entre la pompe 15 et le premier échangeur thermique
- C: Connexion fluidique entre le premier échangeur thermique 8 et le deuxième échangeur thermique 9
- D: Connexion fluidique entre le deuxième échangeur thermique 9 et le générateur de vapeur 6
- E: Connexion fluidique entre le générateur de vapeur 6 et le premier échangeur thermique 5a
- F: Connexion fluidique entre le premier échangeur thermique 5a et le deuxième échangeur thermique 5 b
- G: Connexion fluidique entre le deuxième échangeur thermique 5 b et le réchauffeur 14
- H: Connexion fluidique entre le réchauffeur 14 et l'électrolyseur 1
- I: Connexion fluidique entre l'électrolyseur 1 et le deuxième échangeur thermique 5 b
- J: Connexion fluidique entre le deuxième échangeur thermique 5 b et le premier échangeur thermique 5a
- K: Connexion fluidique entre le premier échangeur thermique 5a et le compresseur 7
- L: Connexion fluidique entre le compresseur 7 et le premier échangeur thermique 8
- M: Connexion fluidique entre le premier échangeur thermique 8 et le troisième échangeur thermique 16
- N: Connexion fluidique entre le troisième échangeur thermique 16 et le séparateur 17
- O: Connexion fluidique entre le séparateur 17 et le compresseur 18
- P: Connexion fluidique entre le compresseur 18 et l'aéroréfrigérant 19
- Q: Connexion fluidique entre l'aéroréfrigérant 19 et le séparateur 20
- R: Connexion fluidique sortant du séparateur 20
- 100: Connexion fluidique entre l'électrolyseur 1 et le deuxième échangeur thermique 11 b
- 101: Connexion fluidique entre le deuxième échangeur thermique 11 b et le premier échangeur thermique 11a
- 102: Connexion fluidique entre le premier échangeur thermique 11a et le deuxième échangeur thermique 9
- 110: Connexion fluidique entre le troisième échangeur thermique 16 et le compresseur 12
- 111: Connexion fluidique entre le compresseur 12 et le premier échangeur thermique 11a
- 112: Connexion fluidique entre le premier échangeur thermique 11a et le deuxième échangeur thermique 11 b
- 113: Connexion fluidique entre le deuxième échangeur thermique 11 b et le réchauffeur 13
- 114: Connexion fluidique entre le réchauffeur 13 et l'électrolyseur 1

## Revendications

1. Système comprenant
- un électrolyseur (1) à haute température (EHT),
- une première ligne d'alimentation (2) de l'électrolyseur configurée pour alimenter l'électrolyseur (1) en vapeur d'eau,
- une première ligne d'évacuation (4) de l'électrolyseur configurée pour évacuer depuis l'électrolyseur (1) du dihydrogène,
- une deuxième ligne d'évacuation (3) de l'électrolyseur configurée pour évacuer depuis l'électrolyseur (1) du dioxygène,
- un premier module d'échange thermique (5) configuré pour assurer un échange thermique entre la première ligne d'alimentation (2) en vapeur d'eau et la première ligne d'évacuation (4) du dihydrogène,
- un générateur de vapeur (6) agencé sur la première ligne d'alimentation (2) en vapeur d'eau, en amont du premier module d'échange thermique (5), et configuré pour produire de la vapeur d'eau à partir d'eau liquide,
**caractérisé en ce que** le système comprend un module de récupération de l'énergie thermique du dihydrogène en sortie du premier module d'échange thermique (5) au profit de la première ligne d'alimentation (2) en vapeur d'eau, le module de récupération comprenant :
o un compresseur (7) agencé sur la première ligne d'évacuation (4) du dihydrogène, en aval du premier module d'échange thermique (5), et configuré pour comprimer le dihydrogène,
o un premier échangeur thermique (8) agencé entre la première ligne d'alimentation (2) en vapeur d'eau, en amont du générateur de vapeur (6), et la première ligne d'évacuation (4) du dihydrogène, en aval du compresseur (7), de sorte à transmettre l'énergie thermique du dihydrogène comprimé à l'eau liquide, en amont du générateur de vapeur (6)
et que le système comprend une deuxième ligne d'alimentation (10) de l'électrolyseur configuré pour alimenter l'électrolyseur (1) en air et un troisième échangeur thermique (16) agencé entre la première ligne d'évacuation (4) du dihydrogène, en aval du premier échangeur thermique (8) du module de récupération d'énergie, et la deuxième ligne d'alimentation (10) de l'air.

2. Système selon la revendication précédente comprenant un deuxième échangeur thermique (9) agencé entre la deuxième ligne d'évacuation (3) du dioxygène et la première ligne d'alimentation (2) en vapeur d'eau, en amont du générateur de vapeur (6), de sorte à transmettre l'énergie thermique du dioxygène à l'eau liquide en amont du générateur de vapeur (6).

3. Système selon la revendication précédente dans lequel le deuxième échangeur thermique (9) est agencé en aval du premier échangeur thermique (8) sur la première ligne d'alimentation (2) en vapeur d'eau.

4. Système selon l'une quelconque des deux revendications précédentes dans lequel le deuxième échangeur thermique (9) et le premier échangeur thermique (8) agencés sur la première ligne d'alimentation (2) en vapeur d'eau, en amont du générateur de vapeur (6), sont associés dans un échangeur thermique à trois fluides.

5. Système selon l'une quelconque des revendications précédentes comprenant un deuxième module d'échange thermique (11) configuré pour assurer un échange thermique entre la deuxième ligne d'alimentation (10) en air et la deuxième ligne d'évacuation (3) du dioxygène. .

6. Système selon l'une quelconque des revendications précédentes comprenant un compresseur (12) agencé sur la deuxième ligne d'alimentation (10) en air et destiné à comprimer l'air.

## Patentansprüche

1. System, umfassend:
- einen Hochtemperatur-Elektrolyseur (1) (EHT-Elektrolyseur),
- eine erste Versorgungsleitung (2) des Elektrolyseurs, die dazu konfiguriert ist, den Elektrolyseur (1) mit Wasserdampf zu versorgen,
- eine erste Ableitungsleitung (4) des Elektrolyseurs, die dazu konfiguriert ist, aus dem Elektrolyseur (1) Dihydrogen abzuleiten,
- eine zweite Ableitungsleitung (3) des Elektrolyseurs, die dazu konfiguriert ist, aus dem Elektrolyseur (1) Disauerstoff abzuleiten,
- ein erstes Wärmeaustauschmodul (5), das dazu konfiguriert ist, einen Wärmeaustausch zwischen der ersten Wasserdampfversorgungsleitung (2) und der ersten Ableitungsleitung (4) des Dihydrogens sicherzustellen,
- einen Dampfgenerator (6), der auf der ersten Wasserdampfversorgungsleitung (2) stromaufwärts des ersten Wärmeaustauschmoduls (5) eingerichtet und dazu konfiguriert ist, Wasserdampf aus flüssigem Wasser zu erzeugen,
**dadurch gekennzeichnet, dass** das System ein Rückgewinnungsmodul der Wärmeenergie des Dihydrogens am Ausgang des ersten Wärmeaustauschmoduls (5) zugunsten der ersten Wasserdampfversorgungsleitung (2) umfasst, wobei das Rückgewinnungsmodul Folgendes umfasst:
° einen Kompressor (7), der auf der ersten Ableitungsleitung (4) des Dihydrogens stromabwärts des ersten Wärmeaustauschmodul (5) eingerichtet und dazu konfiguriert ist, das Dihydrogen zu verdichten,
° einen ersten Wärmetauscher (8), der zwischen der ersten Wasserdampfversorgungsleitung (2) stromaufwärts des Dampfgenerators (6) und der ersten Ableitungsleitung (4) des Dihydrogens, stromabwärts des Kompressors (7) derart eingerichtet ist, dass die Wärmeenergie des komprimierten Dihydrogens an das flüssige Wasser stromaufwärts des Dampfgenerators (6) übertragen wird,
und dass das System eine zweite Versorgungsleitung (10) des Elektrolyseurs umfasst, die dazu konfiguriert ist, den Elektrolyseur (1) mit Luft zu versorgen, und einen dritten Wärmetauscher (16), der zwischen der ersten Ableitungsleitung (4) des Dihydrogens stromabwärts des ersten Wärmetauschers (8) des Energierückgewinnungsmoduls und der zweiten Luftversorgungsleitung (10) eingerichtet ist.

2. System nach dem vorstehenden Anspruch, das einen zweiten Wärmetauscher (9) umfasst, der zwischen der zweiten Ableitungsleitung (3) des Disauerstoffs und der ersten Wasserdampfversorgungsleitung (2) stromaufwärts des Dampfgenerators (6) derart eingerichtet ist, dass die Wärmeenergie des Disauerstoffs an das flüssige Wasser stromaufwärts des Dampfgenerators (6) übertragen wird.

3. System nach dem vorstehenden Anspruch, wobei der zweite Wärmetauscher (9) stromabwärts des ersten Wärmetauschers (8) auf der ersten Wasserdampfversorgungsleitung (2) eingerichtet ist.

4. System nach einem der beiden vorstehenden Ansprüche, wobei der zweite Wärmetauscher (9) und der erste Wärmetauscher (8), die auf der ersten Wasserdampfversorgungsleitung (2) stromaufwärts des Dampfgenerators (6) eingerichtet sind, in einem Wärmetauscher mit drei Fluiden assoziiert sind.

5. System nach einem der vorstehenden Ansprüche, das ein zweites Wärmeaustauschmodul (11) umfasst, das dazu konfiguriert ist, einen Wärmeaustausch zwischen der ersten Luftversorgungsleitung (10) und der zweiten Ableitungsleitung (3) des Disauerstoffs sicherzustellen.

6. System nach einem der vorstehenden Ansprüche, das einen Kompressor (12) umfasst, der auf der zweiten Luftversorgungsleitung (10) eingerichtet und dazu bestimmt ist, die Luft zu komprimieren.

## Claims

1. System comprising
- a high temperature electrolyser (1) (HTE),
- a first supply line (2) of the electrolyser configured to supply steam to the electrolyser (1),
- a first electrolyser discharge line (4) configured to discharge dihydrogen from the electrolyser (1),
- a second electrolyser discharge line (3) configured to discharge dioxygen from the electrolyser (1),
- a first heat exchange module (5) configured to provide heat exchange between the first steam supply line (2) and the first dihydrogen discharge line (4),
- a steam generator (6) arranged on the first steam supply line (2), upstream of the first heat exchange module (5), and configured to produce steam from liquid water,
**characterised in that** the system comprises a module for recovering the thermal energy of dihydrogen at the output of the first heat exchange module (5) for the benefit of the first steam supply line (2), the recovery module comprising:
o a compressor (7) arranged on the first dihydrogen discharge line (4), downstream of the first heat exchange module (5), and configured to compress the dihydrogen,
o a first heat exchanger (8) arranged between the first steam supply line (2), upstream of the steam generator (6), and the first dihydrogen discharge line (4), downstream of the compressor (7), so as to transmit the thermal energy of the compressed dihydrogen to the liquid water, upstream of steam generator (6),
and that the system comprises a second electrolyser supply line (10) configured to supply air to the electrolyser (1) and a third heat exchanger (16) arranged between the first dihydrogen discharge line (4), downstream of the first heat exchanger (8) of the energy recovery module, and the second air supply line (10).

2. System according to the preceding claim comprising a second heat exchanger (9) arranged between the second dioxygen discharge line (3) and the first steam supply line (2), upstream of the steam generator (6), so as to transmit the thermal energy of the dioxygen to the liquid water upstream of the steam generator (6).

3. System according to the preceding claim, wherein the second heat exchanger (9) is arranged downstream of the first heat exchanger (8) on the first steam supply line (2).

4. System according to any one of the two preceding claims, wherein the second heat exchanger (9) and the first heat exchanger (8) arranged on the first steam supply line (2), upstream of steam generator (6), are associated in a three-fluid heat exchanger.

5. System according to any one of the preceding claims comprising a second heat exchange module (11) configured to provide a heat exchange between the second air supply line (10) and the second dioxygen discharge line (3).

6. System according to any one of the preceding claims comprising a compressor (12) arranged on the second air supply line (10) and intended for compressing air.
